(19) Europäisches Patentamt
European Patent Office
Office européen des brevets

(11) **EP 3 907 578 B1**

(12) **EUROPÄISCHE PATENTSCHRIFT**

(45) Veröffentlichungstag und Bekanntmachung des Hinweises auf die Patenterteilung:
**02.08.2023   Patentblatt 2023/31**

(21) Anmeldenummer: **21171981.0**

(22) Anmeldetag: **04.05.2021**

(51) Internationale Patentklassifikation (IPC):
**G05D 23/19** $^{(2006.01)}$

(52) Gemeinsame Patentklassifikation (CPC):
**H05B 1/0283; C02F 1/008; F24H 9/0042; F24H 9/2028; G01F 15/0755; G05D 23/1919;** C02F 1/003; C02F 2209/001; C02F 2209/02; C02F 2209/445; F24H 1/202

(54) **VERFAHREN ZUR ZAPFMENGENBESTIMMUNG AN EINER WARMWASSERSPEICHERVORRICHTUNG**

METHOD FOR DETERMINING THE DRAW-OFF RATE OF A HOT WATER STORAGE DEVICE

PROCÉDÉ DE DÉTERMINATION DU DÉBIT DE SOUTIRAGE SUR UN DISPOSITIF ACCUMULATEUR D'EAU CHAUDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2020   DE 102020112587**

(43) Veröffentlichungstag der Anmeldung:
**10.11.2021   Patentblatt 2021/45**

(73) Patentinhaber: **Stiebel Eltron GmbH & Co. KG 37603 Holzminden (DE)**

(72) Erfinder: **Hüge, Carsten 37287 Wehretal (DE)**

(56) Entgegenhaltungen:
WO-A1-2019/025850    DE-A1- 4 132 399
DE-A1- 10 049 597    GB-A- 2 518 365

**Beschreibung**

Die Erfindung betrifft ein Verfahren zur Zapfmengenbestimmung an einer Warmwasserspeichervorrichtung, mit den Merkmalen des Oberbegriffs des Anspruchs 1.

Im Zusammenhang mit Warmwasserspeichervorrichtungen stellt sich generell das Problem der Verkalkung, insbesondere bei Wassertemperaturen von über 65°C. Solche Temperaturen sind beispielsweise bei Kochendwassergeräten für den Küchengebrauch üblich. Zum Schutz des Speicherbehälters und der darin enthaltenen elektrischen Heizelemente wie beispielsweise elektrischen Widerstandsheizstäben, kann vorgesehen sein, ab einer bestimmten Gesamtwasserhärte einen Wasserfilter im Wasserzulauf vorzusehen. Beispielsweise kann ab einer Gesamtwasserhärte von mehr als 8,5°dH bzw. mehr als 1,5 mmol / l der Betrieb mit einem Wasserfilter vorgesehen sein, dessen Lebensdauer bzw. die Lebensdauer seines Filtereinsatzes von der bei Inbetriebnahme bestimmten und am Gerät eingestellten Wasserhärte des zulaufenden Speisewassers abhängt. Dem Benutzer muss rechtzeitig signalisiert werden, dass die Gesamtfilterkapazität des Wasserfilter erschöpft und damit dessen Lebensdauerende erreicht ist, so dass ein Wechsel des Filtereinsatzes erforderlich ist.

Als sinnvolles Kriterium für das Erreichen des Endes der Lebensdauer ist die durch den Wasserfilter während der Einsatzzeit insgesamt aufbereitete Wassermenge, die sogenannte Zapfmenge, heranzuziehen, da diese bei konstanter Wasserqualität proportional zur Menge der durch den Filter gebundenen Carbonate aus dem durchfließenden Wasser ist. Die Bestimmung der aufbereiteten Wassermenge über eine Volumenstrommessung ist zwar möglich, sie ist aber gerade für einfache Warmwasserspeichervorrichtungen wie Kochendwassergeräte unwirtschaftlich, da der dazu erforderliche Volumenstromsensor ein vergleichsweise teures Bauteil darstellt, das die Herstellung wie die spätere Wartung der Warmwasserspeichervorrichtung deutlich verteuert.

Die WO 2019025850 A1 beschreibt ein Verfahren, mit dem das Entnahmeverhalten aus einem Warmwasserbehälter erfasst wird, um darauf basierend den Verlauf der Speichertemperatur über der Zeit vorausschauend anpassen zu können. Um die Zapfzeitpunkte zu erfassen, wird die Speichertemperatur überwacht. Eine Temperatursenkung wird als repräsentativ für eine zuvor vorgenommene Wasserentnahme angesehen. Eine Zapfmengenbestimmung ist jedoch nicht angegeben.

Die Aufgabe der Erfindung besteht somit darin, ein Verfahren zur Zapfmengenbestimmung an einer Warmwasserspeichervorrichtung anzugeben, mit welchem die Zapfwassermenge ohne einen Volumenstromsensor bestimmbar ist.

Diese Aufgabe wird durch ein Verfahren mit den Merkmalen des Anspruchs 1 gelöst, das mit einer Warmwasserspeichervorrichtung betrieben werden kann, die wenigstens einen Speicherbehälter umfasst, in oder an dem wenigstens ein elektrisches Heizelement und ein Temperatursensor angeordnet sind, welche an eine Regelungseinrichtung zur Temperaturregelung des in dem Speicherbehälter gespeicherten Warmwassers angeschlossen sind.

Bei der Warmwasserspeichervorrichtung kann es sich insbesondere um ein in Küchen zu verwendendes Kochendwassergerät handelt, aber auch um andere Warmwasserspeichervorrichtungen, bei denen die Bestimmung der Zapfmenge ohne Volumenstromsensor erforderlich oder sinnvoll ist.

Die ermittelte Zapfmenge kann herangezogen werden, um z. B. die Filterlebensdauer abzuleiten und daraus ein Signal zum Filterwechsel abzugeben oder um die Notwendigkeit eines Entkalkungsvorgangs anzuzeigen.

Die Erfindung beruht darauf, dass moderne Warmwasserspeichervorrichtungen ohnehin über eine elektronische Regelungseinrichtung zur Temperaturregelung des in dem Speicherbehälter gespeicherten Warmwassers verfügen. Über diese kann die Beheizung parameterabhängig, beispielweise unter Berücksichtigung einer Solltemperatur, eines Absenkbetriebs usw. geregelt werden. Zudem können bei einer elektronischen Regelungseinrichtung nahezu kostenneutral weitere Funktionen über eine Softwareänderung implementiert werden.

Der wesentliche Ansatz bei dem erfindungsgemäßen Verfahren besteht darin, dass die in einem bestimmten Beobachtungszeitraum durch die Warmwasserspeichervorrichtung durchgeflossene, als verbrauchte Wassermenge der darin aufgeheizten Wassermenge an neu zugelaufenem Kaltwasser entspricht und dass sich die zugelaufene Wassermenge wiederum aus der Aufsummierung der zur Aufheizung im selben Zeitraum zugeführten elektrischen Heizenergie bestimmen lässt. Wesentlich ist weiterhin, dass nach der Erfindung zugleich die stationären Wärmeverluste in Abzug gebracht werden, so dass unterscheidbar ist, welcher Anteil der über eine Zeitraum zugeführten elektrischen Energie zur Aufheizung von zugeflossenem Kaltwasser und welcher Anteil für die Aufrechterhaltung der Soll-Wassertemperatur benötigt wurde, ohne dass eine Wasserentnahme erfolgte.

Dadurch ergibt sich der wesentliche Vorteil der Erfindung, dass sich allein durch die Nutzung der ohnehin vorhandenen Bauteile wie eines Temperaturfühlers und der elektronischen Regelungseinrichtung die Zapfmenge in einem bestimmten Beobachtungszeitraum bestimmen lässt, ohne dass ein zusätzlicher Sensor erforderlich ist, insbesondere kein kostspieliger Volumenstromsensor.

Als Beobachtungszeitraum kann beispielsweise der Zeitraum vom Einbau eines Wasserfilters bzw. dem Austausch des Filtereinsatzelements darin bis zum Erreichen der für den Filterbetrieb vorgesehenen maximalen Zapfmenge definiert werden. Falls kein Wasserfilter vorgesehen ist, kann signalisiert werden, dass eine Entkalkung des Speicherbehälters durchzuführen ist.

Anstelle der Zapfmenge, welche das im Beobachtungszeitraum durchgeflossene Wasservolumen in einer üblichen Maßeinheit für volumetrische Größen angibt und somit für den Benutzer direkt verständlich ist, kann auch ein neutraler Wassermengenindikatorwert herangezogen werden, der proportional dazu ist und z. B. direkt der, über den Beobachtungszeitraum aufsummierten Wärmemenge entspricht. Das Lebensdauerende des Filters o.ä. wird dann durch Erreichen eines Grenzwert dieses Wassermengenindikatorwerts angezeigt. Nach Durchführung einer Entkalkung oder eines Filterwechsels kann der aufsummierte Wert dann zurückgesetzt werden, so dass ein neuer Beobachtungszeitraum beginnt.

Da nach der Erfindung die stationären Wärmeverluste an der Warmwasserspeichervorrichtung mitberücksichtigt werden, wird die Zapfmenge erfindungsgemäß mit einer Genauigkeit bestimmt, die für Anwendungsfälle wie die Signalisierung eines fälligen Filterwechsels hinreichend gut ist. Vergleichsmessungen haben ergeben, dass die nach dem erfindungsgemäßen Verfahren rechnerisch bestimmte Zapfmenge nur um etwa 10% bis 15% von dem im Beobachtungszeitraum durch die Warmwasserspeichervorrichtung tatsächlich geflossenen Volumen abweicht.

Die Wärmeverluste der Warmwasserspeichervorrichtung sind abhängig von der Ist-Temperatur des in ihrem Speicherbehälter bevorrateten Wasser, von der Umgebungstemperatur und der um den Speicherbehälter herum im Gehäuse eingebauten thermischen Isolierung. Da der bauartbedingte Wärmewiderstand konstant ist, hängt die Verlustwärmeleistung allein von der Temperaturdifferenz zwischen der Wassertemperatur im Behälterinneren und der Umgebungstemperatur ab.

Die Umgebungstemperatur kann über einen zusätzlichen Temperatursensor gemessen werden. Um einen solchen auch einzusparen, kann vorgesehen sein, die anzunehmende Umgebungstemperatur vom Benutzer als festen Parameter in die Regelungseinrichtung eingeben zu lassen. Dies führt nicht zu einer relevanten Ungenauigkeit, sofern die Warmwasserspeichervorrichtung bei einer annähernd konstanten Umgebungstemperatur in einem Wohngebäude betrieben wird.

Besonders vorteilhaft ist es, wenn der Verlustwärmestrom für eine bestimmte Bauart einer Warmwasserspeichervorrichtung für verschiedene Warmwassertemperaturen und Umgebungstemperaturen messtechnisch durch den Hersteller ermittelt wird und herstellerseitig in einem Kennfeld in einem Speicher eines Micro-Controllers der elektronischen Regelungseinrichtung hinterlegt wird. Das Kennfeld umfasst bevorzugt einen Wärmeverlustkoeffizienten in Abhängigkeit von der Ist-Temperatur im Speicherbehälter mit einer endlichen Anzahl an Stützpunkten. Zwischenwerte zwischen den Stützpunkten können linear interpoliert werden. Ebenso kann bei ausreichender Größe des elektronischen Speichers und Leistungsfähigkeit des Micro-Controllers in der Regelungseinrichtung auch eine mathematische Funktion in der Form:

$$\text{Verlustwärmemenge } Q_V = f \text{ (Ist-Wassertemperatur } \vartheta )$$

realisiert werden, wodurch eine bessere Genauigkeit der Zuordnung erzielbar ist.

Unabhängig davon, wie der Verlustwärmestrom definiert ist oder während des Betriebs bestimmt wird, sieht das erfindungsgemäße Verfahren zumindest die folgenden Schritte vor:

In einem Messintervall, das mit einem Umschaltvorgang des Heizelements durch die elektronische Regelungseinrichtung nach Ablauf einer Heizdauer beginnt und bis zum nächstfolgenden gleichartigen Umschaltvorgang andauert, wird die thermische Verlustwärmemenge, d.h. die konvektiv an die Umgebung abgegebene Wärmemenge des Gerätes, ermittelt und fortlaufend aufsummiert.

Das Messintervall wird vorzugsweise als Zeitspanne zwischen aufeinanderfolgenden Ausschaltvorgängen festgelegt. Entsprechend wird die Erfindung nachfolgend anhand eines Ausführungsbeispiels beschrieben, bei dem die Messintervalle durch aufeinander folgende Ausschaltvorgänge definiert sind.

Möglich ist aber auch, stattdessen ein Messintervall zwischen aufeinanderfolgenden Einschaltvorgängen der Heizeinrichtung zu messen. Wichtig ist lediglich, dass gleichartige Schaltvorgänge erfasst werden, dass also am Reglerausgang entweder immer die ansteigende oder immer die abfallende Flanke zur Begrenzung des Messintervalls benutzt wird.

Ebenso kann man statt direkt aufeinander folgender Schaltvorgänge auch gleichartige Intervalle anderer Art heranziehen, wie beispielsweise jeden dritten Ein- oder Ausschaltvorgang. Die Messintervalle sollten aber während eines Beobachtungszeitraums immer gleichartig definiert sein, um die Berechnung zu vereinfachen.

Die für die Berechnung der Wärmebilanz heranzuziehende mittlere Wassertemperatur im Speicher in einem Messintervall kann in verschiedener Weise berechnet werden:

- Im einfachsten Fall wird der Verlustwärmeleistung auf Basis einer mittleren Temperatur bestimmt, die sich als Mittelwert der Temperaturen bei Reglereinschaltung und Reglerabschaltung ergibt. Bedingt durch die vorgegebenen Temperaturwerte, bei denen die Regelungseinrichtung die Heizrichtung zuschaltet bzw. wieder abschaltet, schwankt

die Wassertemperatur $\vartheta$ annähernd nur entsprechend einer voreingestellten Hysterese um den Soll-Werten der Regelungseinrichtung.

- Für eine grobe Näherung kann eine Messung der Ist-Temperatur an den Grenzen des Messintervalls sogar ganz entfallen, wobei dann als mittlere Temperatur zur Berechnung der Verlustwärmeleistung der eingestellte Soll-Wert der Wassertemperatur herangezogen werden. Bei vielen aufeinanderfolgenden Zapfvorgängen und entsprechend kurzen Verweilzeiten dazwischen ist diese Methode ausreichend genau.

- Sind die Ruhe-Zeitintervalle aber länger, weil nur selten Wasser gezapft wird, sollte für eine größere Genauigkeit bei der Berechnung der Verlustwärmeleistung auch der Verlauf der Wassertemperatur im Speicher während der Ausschaltphase des Heizelements genauer bestimmt werden.

Dazu werden die in festen Zeitabständen gemessenen Temperaturwerte $T_i$ aufsummiert und durch die Anzahl $n_i$ der in diese Summe eingeflossenen Temperaturwerte geteilt, also $\Sigma(T_i) / n_i$. Diese Methode kann angewandt werden, sofern die Längen der Intervalle nicht stark voneinander abweichen.

- Die mittlere Temperatur kann am genauesten durch eine Methode bestimmt werden, die auch dann anwendbar ist, wenn die Länge der Messintervalle stärker gestreut ist. Diese Methode sieht vor, jeweils das Produkt aus Temperatur und Zeitintervall, in dem die Temperatur nahezu konstant war ($T_i*\Delta t_i$), aufzusummieren, also: $(\Sigma(T_i*\Delta t_i))/ t_m$ . Der Summenwert wird dann durch die Gesamt-Messintervallzeit $t_m$ dividiert. Damit wird quasi ein Flächenmittelwert gebildet, der hinsichtlich seiner Genauigkeit einer theoretisch ebenfalls denkbaren Integralbildung sehr nahekommt, aber einfacher umsetzbar ist.

Während desselben Zeitraums, über den die Verlustwärmeleistung bestimmt wird, wird auch die der Warmwasserspeichervorrichtung durch das elektrische Heizelement positiv zugeführte Wärmemenge ermittelt.

Am einfachsten ist die dem Heizelement zugeführte Wärmemenge $Q_H$ bestimmbar, indem durch die elektronische Regelungseinrichtung eine Heizzeitdauer $\Delta t_H$ eines Heizintervalls $H_i$ gemessen wird, in welchem das Heizelement eingeschaltet ist und die Heizzeitdauer $\Delta t_H$ mit der elektrischen Nennleistung des Heizelement multipliziert wird.

Alternativ kann die im Messintervall durch das Heizelement dem Wasser im Speicher zugeführte Wärmemenge $Q_H$ auch durch Messung der an das Heizelement abgegebenen elektrischen Leistung bestimmt werden.

Zum Zeitpunkt der nächstfolgenden Reglerumschaltung werden die Wärmemengen bilanziert. Sofern in der Bilanz die zugeführte Wärmemenge größer ist als die gleichzeitig abgegebenen Verlustwärmemenge, so bedeutet dies, dass die Differenzwärmemenge zur Aufheizung von kaltem Wasser aufgewendet wurde.

Die bilanzierte Wärmemenge kann in dem erfindungsgemäßen Verfahren unmittelbar als ein Wassermengenindikatorwert verwendet werden. Der Wassermengenindikatorwert wird über die Betriebsdauer laufend aufsummiert, bis der aufsummierte Wassermengenindikatorwert einen in der Regelungseinrichtung hinterlegten Grenzwert erreicht hat, ab dem ein Signal für den Benutzer oder eine andere Aktion ausgelöst wird. Ein solcher Wassermengenindikatorwert ist also auch ohne weitere Umrechnung als ein Maß für die im beobachteten Messintervall gezapfte Wassermasse oder das Wasservolumen verwendbar.

Die Zapfwassermasse kann aber nach einer bevorzugten Variante des erfindungsgemäßen Verfahrens auch in eine Volumenangabe umgerechnet werden, die als Anzeigewert für einen Benutzer besser geeignet ist. Die Zapfwassermasse kann bei einer als konstant angenommenen Kaltwasserzulauftemperatur von $\vartheta_{cw}$=const. und mit der bekannten Wärmekapazität des Wassers von

$$c_{pH2O}=4200 \text{ J/(kg}\cdot\text{K)}$$

berechnet werden zu

$$m = \frac{\Delta Q}{c_{p\,H2O}\cdot(\vartheta_m - \vartheta_{cw})}$$

Diese Zapfwassermasse wiederum lässt sich bei einer Dichte des Wassers von ca. $\rho_{H2O}$=1kg / l unmittelbar in ein Volumen umrechnen, welches beispielsweise als Verschleißindikator für einen an die Warmwasserspeichervorrichtung angeschlossenen Wasserfilter dienen kann.

Die Kaltwasserzulauftemperatur kann als Konstante in dem Speicher des Micro-Controllers der elektronischen Regelungseinrichtung hinterlegt sein, wodurch die oben bereits genannte und für die meisten Anwendungsfälle ausreichende Genauigkeit erzielbar ist.

Die Genauigkeit des erfindungsgemäßen Verfahrens kann weiterhin dadurch gesteigert werden, dass die in dem beobachteten Messintervall tatsächlich gegebene Kaltwasserzulauftemperatur über einen zusätzlichen Temperatursensor gemessen wird.

Die Erfindung wird nachfolgend mit Bezug auf die Zeichnungen näher erläutert. Die Figuren zeigen im Einzelnen:

Fig. 1    ein schematischer Aufbau einer Warmwasserspeichervorrichtung; und

Fig. 2    der Verlauf der Wassertemperatur und der elektrischen Leistung in einem Diagramm über der Zeit aufgetragen.

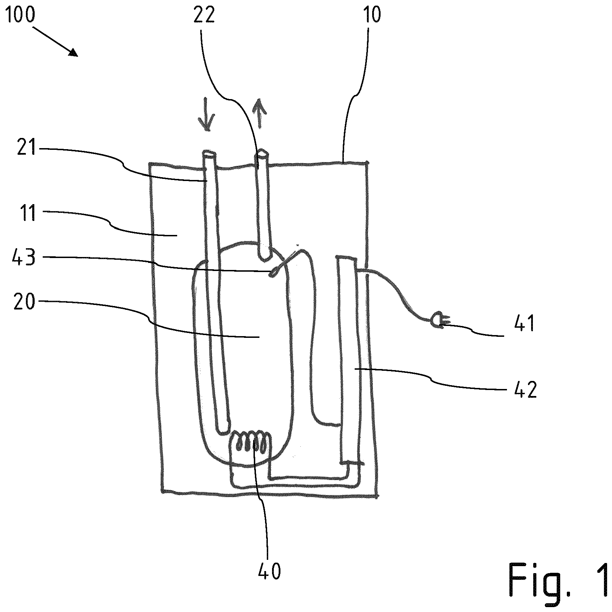

Fig. 1 zeigt einen schematischen Aufbau einer Warmwasserspeichervorrichtung am Beispiel eines einfachen Kochendwassergeräts 100. Dieses besitzt ein Gehäuse 10, welches einen Kaltwasserzulauf 20 sowie einen Heißwasserauslauf 22 und eine elektrische Anschlussleitung 55 aufweist. Im Inneren befindet sich ein Speicherbehälter 20. In diesem sind ein elektrisches Heizelement 40 in Form eines Widerstandsheizkörpers, beispielsweise eines Rohrheizkörpers, und ein Temperaturfühler 41 angeordnet. Zwischen dem Speicherbehälter 20 und dem Gehäuse 10 ist eine Wärmeisolierung 11 vorgesehen, die den Verlustwärmestrom des Kochendwassergerätes 100 an die Umgebung reduziert.

Die Regelung der Wassertemperatur $\vartheta$ im Speicherbehälter 20 erfolgt durch eine elektronische Regelungseinrichtung 42, die über die Anschlussleitung 41 an das Stromnetz angeschlossen ist. Sie bestimmt die Warmwassertemperatur im Speicherbehälters 20 mittels eines darin angeordneten Temperaturfühlers 43. Die Reglereinheit 42 wirkt auf die elektrische Heizeinrichtung 40 ein, indem sie diese mit dem Stromnetz verbindet und wieder davon trennt, also zu- und abschaltet, um die Wassertemperatur $\vartheta$ auf dem eingestellten Temperatursollwert zu halten.

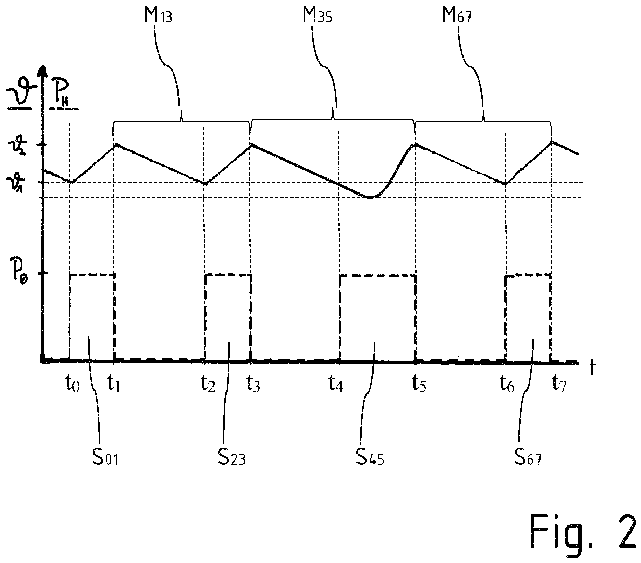

Figur 2 zeigt im oberen Abschnitt exemplarisch den zeitlichen Verlauf der Wassertemperatur $\vartheta$ im Speicherbehälter 20 über der Zeit t. Die Wassertemperatur $\vartheta$ wird durch die elektronische Regelungseinrichtung 42 mittels des integrierten Temperaturfühlers 41 bestimmt.

Bedingt durch die vorgegebenen Temperaturwerte, bei denen die Regelungseinrichtung 42 die Heizrichtung 40 zuschaltet bzw. wieder abschaltet, schwankt die Wassertemperatur $\vartheta$ stets zwischen einer unteren Temperatur $\vartheta_1$ und einer oberen Temperatur $\vartheta_2$ , woraus sich in einem bestimmten Messintervall eine mittlere Temperatur von

$$\vartheta_m=(\vartheta_1+ \vartheta_2 )/2$$

ergibt. Diese wird zur Vereinfachung der Berechnung der Verlustwärmeleistung herangezogen.

Außerdem ist in Fig. 2 zusätzlich der Verlauf der für die Erwärmung des Wassers mittels der Heizrichtung 40 aufgewendeten elektrischen Heizleistung $P_H$ aufgetragen. Da die Wassertemperatur $\vartheta$ hier über eine einfache Zu- und Abschaltung der Heizrichtung 40 geregelt wird, ergeben sich bei der Heizleistung $P_H$ senkrechte Flanken, wodurch Anfang und Ende der Messintervalle $M_i$ exakt bestimmbar sind.

Zur Durchführung des erfindungsgemäßen Verfahrens sind zwei Zeiträume zu betrachten und messtechnisch zu erfassen:

- Ein Messintervall $M_i$ ist definiert als die Zeitspanne zwischen einer Abschaltung des elektrischen Heizelements 40 und der nächstfolgenden Abschaltung. In Figur 2 beginnt ein Messintervall $M_{13}$ zum Zeitpunkt $t_1$ der Abschaltung und endet zum Zeitpunkt ts; ein Messintervall $M_{35}$ schließt sich zwischen den Zeitpunkten $t_3$ und $t_5$ an.
- Ein Heizintervall $H_i$ entspricht dem Zeitraum zwischen dem Einschalten des Heizelement 40 und dem anschließenden Ausschalten. Die Heizintervalle $H_i$ bilden also jeweils einen Teil der Messintervalle $M_i$.

Betrachtet man beispielsweise das jeweilige Heizintervall $H_i$, in dem die Heizeinrichtung 40 zugeschaltet ist, so wird in diesem Heizintervall $H_i$ dem System jeweils durch die Heizeinrichtung 40 Wärmeenergie zugeführt:

| *Heizintervall* | *Zeitdauer* $\Delta t_{Hi}$ | *Zugeführte Wärmeenergie* $Q_{Hi}$ |
|---|---|---|
| $H_{01}$ | $t_0$ bis $t_1$ | $Q_{H01}=P_0\cdot(t_1-t_0)$ |
| $H_{23}$ | $t_2$ bis $t_3$ | $Q_{H23}=P_0\cdot(t_3-t_2)$ |
| $H_{45}$ | $t_4$ bis $t_5$ | $Q_{H45}=P_0\cdot(t_5-t_4)$ |

Außerdem ist rechnerisch zu berücksichtigen, dass ständig ein Verlustwärmestrom vom Inneren des Speicherbehälters 20 durch die Wärmeisolierung 11 und das Gehäuse 10 zur Umgebung gegeben ist. Dieser ist abhängig von der Temperaturdifferenz zwischen der Wassertemperatur $\vartheta$ im Inneren des Speicherbehälters 20 und der Umgebung. Der Verlustwärmestrom ist bei angenommener, konstanter Umgebungstemperatur $\vartheta_{amb}$ sowie unter Berücksichtigung des bekannten Wärmewiderstandswerts der Wärmeisolierung 11 nur von der mittleren Temperatur des Wassers $\vartheta_m$ im Speicherbehälter 20 abhängig. Er kann bei Herstellung oder Inbetriebnahme durch Messungen bei unterschiedlichen Speichertemperaturen bestimmt und in der Regelungseinrichtung 42 hinterlegt werden.

Hieraus ergibt sich somit eine speichertemperaturabhängige Funktion des Verlustwärmestroms Pv($\vartheta$). In einem bestimmten Messintervall $M_{xy}$ zwischen $t_x$ und $t_y$ geht somit die Verlustwärmemenge

$$Q_{Vxy} = P_V(\vartheta_{mxy})\cdot(t_y-t_x)$$

aus dem Behälterinneren an die Umgebung über. Zu jedem Zeitpunkt, der jeweils einer Reglerabschaltung zugeordnet ist, wird das laufende Messintervall $M_i$ beendet und die Summe der durch die Beheizung zugeführten Energiemenge $Q_H$ mit der in demselben Messintervall aufgrund von Wärmeverlusten an die Umgebung verloren gegangenen Verlustwärmemenge Qv bilanziert; zugleich wird ein neues Messintervall $M_i$ begonnen:

$$\Delta Q_i = Q_{Hi}-Q_{Vi}$$

Sofern die zugeführte Wärmemenge $Q_H$ größer ist als die durch Verluste an die Umgebung abgegebene Wärmemenge Qv, so ist die Differenz $\Delta Q$ positiv und entspricht einer zur Erwärmung von neu zugeführtem Kaltwasser aufgewandten Wärmemenge.

Für das Messintervall $M_{13}$ gemäß Fig. 2, das von $t_1$ bis $t_3$ läuft, ergibt sich eine Verlustwärmemenge

$$Q_{V13} = P_V(\vartheta_{m13})\cdot\Delta t_{y13}.$$

Innerhalb des Messintervall $M_{13}$ gibt es ein Heizintervall $H_{23}$, in dem das elektrische Heizelement 40 zugeschaltet ist. Für den Zeitraum $t_2$ bis $t_3$ wird die folgende Menge an elektrischer Energie entsprechend einer zur Aufheizung des Wassers im Speicherbehälter aufgewandten Wärmemenge zugeführt:

$$Q_{H23} = P_0\cdot\Delta t_{23}$$

Die Bilanz für das Messintervall $M_{13}$ ist dann:

$$\Delta Q_{13} = P_0\cdot\Delta t_{23} - P_V(\vartheta_{m13})\cdot\Delta t_{y13}.$$

In dem Messintervall $M_{13}$ in Figur 2 ist das Heizintervall $H_{23}$ genauso lang wie das vorausgegangene Heizintervall $H_{01}$. In diesen Heizintervallen werden nur die stationären Wärmeverluste ausgeglichen. Die Wärmebilanz $\Delta Q_{13}$ ist folglich null bzw. bewegt sich innerhalb der Grenzen eines Toleranzfeldes, das definiert wurde, um übliche Messungenauigkeiten nicht in die fortlaufende Aufsummierung des Wassermengenindikatorwerts einfließen zu lassen.

Das nachfolgende Messintervall $M_{35}$ hingegen ist länger, weil das darin enthaltene Heizintervall $H_{45}$ länger ist und der für die Beendigung des Messintervalls maßgebliche Ausschaltimpuls zum Zeitraum $t_5$ später erfolgt. Der Grund für das verlängerte Heizintervall $H_{45}$ besteht darin, dass in dem Messintervall $M_{35}$ eine Wassermenge aus dem Speicherbehälter 12 gezapft wurde und nachströmendes Kaltwasser aufgeheizt werden musste. Das ist außerdem in dem Temperaturverlauf in Figur 2 erkennbar; die Wassertemperatur sinkt trotz Zuschaltung des Heizelements 40 bei Erreichen der Mindesttemperatur $\vartheta_1$ zum Zeitpunkt t4 kurzzeitig bis unter die Mindesttemperatur $\vartheta_1$ ab.

Die Wärmemengenbilanz für das Messintervall $M_{35}$ ist folglich positiv und der in der Regelungseinrichtung 42 fortlaufend aufsummierte Wassermengenindikatorwert wird entsprechend um den im Messintervall ermittelten Differenzbetrag erhöht.

Im letzten Messintervall $M_{67}$ in Figur 2 ist das Heizintervall $H_{67}$ wieder so kurz wie die vorausgegangenen Heizintervalle $H_{01}$ und $S_{23}$, das heißt, in diesem Heizintervall wird abermals nur der stationäre Wärmeverlust ausgeglichen und die Wärmemengenbilanz ist null.

**Patentansprüche**

1. Verfahren zur Zapfmengenbestimmung an einer Warmwasserspeichervorrichtung (100), die wenigstens einen Speicherbehälter (20) umfasst, in oder an dem wenigstens ein elektrisches Heizelement (40) und ein Temperatursensor (43) angeordnet sind, welche an eine elektronische Regelungseinrichtung (42) zur Temperaturregelung des in dem Speicherbehälter (20) gespeicherten Warmwassers angeschlossen sind, wobei die Wassertemperatur durch Ein- und Ausschalten des elektrischen Heizelements (40) geregelt wird,

   wobei mittels der elektronischen Regelungseinrichtung (42) eine Zeitdauer $\Delta t_M$ eines Messintervalls $M_i$ zwischen zwei oder mehr aufeinanderfolgenden Einschaltungen oder Ausschaltungen des elektrischen Heizelements (40) gemessen wird;
   **dadurch gekennzeichnet, dass**

   - dass für das Messintervall $M_i$ eine Wärmemengendifferenz $\Delta Q_i$ als Differenz aus der durch das Heizelement zugeführten Wärmemenge $Q_H$ und der an die Umgebung abgegebene Verlustwärmemenge Qv berechnet wird, wobei die Verlustwärmemenge Qv aus einem bauartbedingten Wärmewiderstand und der Temperaturdifferenz zwischen der über den Temperatursensor (43) gemessenen Wassertemperatur $\vartheta$ im Inneren des Speicherbehälters (20) und der Umgebungstemperatur $\vartheta_{amb}$ berechnet wird;
   - der Wärmemengendifferenz $\Delta Q_i$ ein Wassermengenindikatorwert zugeordnet wird, der der im Messintervall $M_i$ von der Warmwasserspeichervorrichtung abgegebenen Zapfmenge entspricht oder proportional dazu ist, und
   - dass die Wassermengenindikatorwerte der aufeinanderfolgenden Messintervalle $M_i$ aufsummiert werden.

2. Verfahren nach Anspruch 1, **dadurch gekennzeichnet, dass** die durch das Heizelement zugeführten Wärmemenge $Q_H$ durch die elektronische Regelungseinrichtung (42) über eine Heizzeitdauer $\Delta t_H$ eines Heizintervalls $H_i$ gemessen wird, in welchem das Heizelement (40) eingeschaltet ist, und dass die Heizzeitdauer $\Delta t_H$ mit der elektrischen Nennleistung des Heizelements (40) multipliziert wird.

3. Verfahren nach Anspruch 1, **dadurch gekennzeichnet, dass** die im Messintervall durch das Heizelement (40) zugeführte Wärmemenge $Q_H$ durch Messung der an das Heizelement abgegebenen elektrischen Leistung bestimmt wird.

4. Verfahren nach einem der Ansprüche 1 bis 3, **dadurch gekennzeichnet, dass** durch die elektronische Regelungseinrichtung (42) ein Signal abgegeben wird und/oder eine Aktion ausgelöst wird, wenn der aufsummierte Wassermengenindikatorwert einen voreingestellten Grenzwert erreicht oder überschreitet.

5. Verfahren nach einem der Ansprüche 1 bis 4, **dadurch gekennzeichnet, dass** als Wassermengenindikatorwert die Masse des gezapften Wassers berechnet wird.

6. Verfahren nach einem der Ansprüche 1 bis 4, **dadurch gekennzeichnet, dass** als Wassermengenindikatorwert das Volumen des gezapften Wassers berechnet wird.

7. Verfahren nach einem der Ansprüche 1 bis 6, **dadurch gekennzeichnet, dass** zur Berechnung der an die Umgebung abgegebenen Verlustwärmemenge Qv wenigstens ein von einer Soll-Wassertemperatur $\vartheta$ im Speicherbehälter (20) und/oder von einer Umgebungstemperatur $\vartheta_{amb}$ der Warmwasserspeichervorrichtung (100) abhängiger, zeitproportionaler Wärmeverlustkoeffizient in der Regelungseinrichtung (42) berechnet wird oder darin hinterlegt wird.

8. Verfahren nach Anspruch 7, **dadurch gekennzeichnet, dass** in einem Kennfeld, welches in einem Speicher in der Regelungseinrichtung (42) enthalten ist, mehrere Wärmeverlustkoeffizienten für verschiedene Kombinationen der Soll-Wassertemperatur $\vartheta$ und der Umgebungstemperatur $\vartheta_{amb}$ hinterlegt werden.

9. Verfahren nach einem der vorhergehenden Ansprüche, **dadurch gekennzeichnet, dass** die Umgebungstemperatur $\vartheta_{amb}$ über einen Umgebungstemperatursensor gemessen wird.

10. Verfahren nach einem der vorhergehenden Ansprüche, **dadurch gekennzeichnet, dass** die Zulauftemperatur des in den Speicherbehälter (12) einlaufenden Kaltwassers über einen Temperatursensor gemessen wird.

**Claims**

1. A method for determining the draw-off quantity on a hot water storage apparatus (100) comprising at least one storage tank (20), in or on which at least one electric heating element (40) and a temperature sensor (43) are disposed and connected to an electronic control device (42) for controlling the temperature of the hot water stored in the storage tank (20), wherein the water temperature is controlled by activating and deactivating the electric heating element (40),

   wherein a time period $\Delta t_M$ of a measurement interval $M_i$ between two or more successive activations or deactivations of the electric heating element (40) is measured via the electronic control device (42);
   **characterised in that**

   - a heat quantity differential $\Delta Q_i$ as the difference of the heat quantity $Q_H$ supplied by the heating element and the heat loss quantity Qv delivered to the environment is calculated for the measurement interval $M_i$, wherein the heat loss quantity Qv is calculated from a design-inherent thermal resistance and the temperature differential between the water temperature $\vartheta$ inside the storage tank (20) measured via the temperature sensor (43) and the ambient temperature $\vartheta_{amb}$;
   - a water quantity indicator value corresponding to or proportional to the draw-off quantity delivered by the hot water storage apparatus in the measurement interval $M_i$ is assigned to the heat quantity differential $\Delta Q_i$, and
   - the water quantity indicator values of the successive measurement intervals $M_i$ are summed.

2. The method according to claim 1, **characterised in that** the heat quantity $Q_H$ supplied by the heating element is measured by the electronic control device (42) via a heating time period $\Delta t_H$ of a heating interval $H_i$ in which the heating element (40) is activated, and **in that** the heating time period $\Delta t_H$ is multiplied by the nominal electric power of the heating element (40).

3. The method according to claim 1, **characterised in that** the heat quantity $Q_H$ supplied by the heating element (40) in the measurement interval is determined by measuring the electric power delivered to the heating element.

4. The method according to one of claims 1 to 3, **characterised in that** a signal is delivered and/or an action initiated by the electronic control device (42) when the summed water quantity indicator value reaches or exceeds a preset limit.

5. The method according to one of claims 1 to 4, **characterised in that** the mass of the drawn-off water is calculated as the water quantity indicator value.

6. The method according to one of claims 1 to 4, **characterised in that** the volume of the drawn-off water is calculated as the water quantity indicator value.

7. The method according to one of claims 1 to 6, **characterised in that**, for calculation of the heat loss quantity Qv delivered to the environment, at least a time-proportional heat loss coefficient dependent on a set water temperature $\vartheta$ in the storage tank (20) and/or on an ambient temperature $\vartheta_{amb}$ of the hot water storage apparatus (100) is calculated in the control device (42) or stored therein.

8. The method according to claim 7, **characterised in that** multiple heat loss coefficients for different combinations of the set water temperature $\vartheta$ and the ambient temperature $\vartheta_{amb}$ are stored in a characteristic diagram, which is contained in a memory in the control device (42).

9. The method according to one of the preceding claims, **characterised in that** the ambient temperature $\vartheta_{amb}$ is measured via an ambient temperature sensor.

10. The method according to one of the preceding claims, **characterised in that** the inlet temperature of the cold water entering the storage tank (12) is measured via a temperature sensor.

**Revendications**

1. Procédé de détermination de quantité d'eau soutirée sur un dispositif accumulateur d'eau chaude (100) qui comprend au moins un ballon (20) dans ou sur lequel sont disposés au moins un élément chauffant (40) électrique et un capteur de température (43), lesquels sont raccordés à un système de régulation (42) électronique destiné à réguler la température de l'eau chaude accumulée dans le ballon (20), la température de l'eau étant régulée par la mise en marche et l'arrêt de l'élément chauffant (40) électrique,

   une durée $\Delta t_M$ d'un intervalle de mesure $M_i$ entre deux mises en marche ou arrêts successifs ou plus de l'élément chauffant (40) électrique étant mesurée au moyen du système de régulation (42) électronique ;
   **caractérisé en ce que**

   - pour l'intervalle de mesure $M_i$, une différence de quantité de chaleur $\Delta Q_i$ est calculée sous la forme d'une différence entre la quantité de chaleur $Q_H$ apportée par l'élément chauffant et la quantité de chaleur perdue $Qv$ cédée à l'environnement, la quantité de chaleur perdue $Qv$ étant calculée à partir d'une résistance thermique liée au type de construction et de l'écart de température entre la température de l'eau $\vartheta$ à l'intérieur du ballon (20) mesurée par le capteur de température (43) et la température ambiante $\vartheta_{amb}$ ;
   - une valeur indicatrice de la quantité d'eau est associée à la différence de quantité de chaleur $\Delta Q_i$, ladite valeur indicatrice de la quantité d'eau correspondant à la quantité soutirée fournie par le dispositif accumulateur d'eau chaude pendant l'intervalle de mesure $M_i$ ou étant proportionnelle à celle-ci, et
   - les valeurs indicatrices de la quantité d'eau des intervalles de mesure $M_i$ successifs sont additionnées.

2. Procédé selon la revendication 1, **caractérisé en ce que** la quantité de chaleur $Q_H$ apportée par l'élément chauffant est mesurée par le système de régulation (42) électronique sur une durée de chauffage $\Delta t_H$ d'un intervalle de chauffage $H_i$ pendant lequel l'élément chauffant (40) est en marche, et **en ce que** la durée de chauffage $\Delta t_H$ est multipliée par la puissance nominale électrique de l'élément chauffant (40).

3. Procédé selon la revendication 1, **caractérisé en ce que** la quantité de chaleur $Q_H$ apportée par l'élément chauffant (40) pendant l'intervalle de mesure est déterminée par mesure de la puissance électrique fournie à l'élément chauffant.

4. Procédé selon l'une des revendications 1 à 3, **caractérisé en ce qu'**un signal est émis et/ou une action est déclenchée par le système de régulation (42) électronique quand la valeur indicatrice de la quantité d'eau additionnée atteint ou dépasse une valeur limite préréglée.

5. Procédé selon l'une des revendications 1 à 4, **caractérisé en ce que** la masse de l'eau soutirée est calculée sous la forme d'une valeur indicatrice de la quantité d'eau.

6. Procédé selon l'une des revendications 1 à 4, **caractérisé en ce que** le volume de l'eau soutirée est calculé sous la forme d'une valeur indicatrice de la quantité d'eau.

7. Procédé selon l'une des revendications 1 à 6, **caractérisé en ce que**, pour le calcul de la quantité de chaleur perdue $Qv$ cédée à l'environnement, au moins un coefficient de perte de chaleur proportionnel au temps, fonction d'une température de consigne de l'eau $\vartheta$ dans le ballon (20) et/ou d'une température ambiante $\vartheta_{amb}$ du dispositif accumulateur d'eau chaude (100) est calculé dans le système de régulation (42) ou enregistré dans celui-ci.

8. Procédé selon la revendication 7, **caractérisé en ce que** plusieurs coefficients de perte de chaleur relatifs à différentes combinaisons de température de consigne de l'eau $\vartheta$ et de température ambiante $\vartheta_{amb}$ sont enregistrés dans un diagramme caractéristique contenu dans une mémoire du système de régulation (42).

9. Procédé selon l'une quelconque des revendications précédentes, **caractérisé en ce que** la température ambiante $\vartheta_{amb}$ est mesurée par un capteur de température ambiante.

10. Procédé selon l'une quelconque des revendications précédentes, **caractérisé en ce que** la température d'arrivée de l'eau froide entrant dans le ballon (12) est mesurée par un capteur de température.

100

22

10

21

11

43

20

40

41

42

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019025850 A1